# EUROPÄISCHE PATENTSCHRIFT

(11) **EP 1 616 400 B1**
(45) Veröffentlichungstag und Bekanntmachung des Hinweises auf die Patenterteilung: **02.11.2006**
(21) Anmeldenummer: 04725392.7
(22) Anmeldetag: 02.04.2004
(51) Int. Cl.: H04J 3/08

(54) **VERFAHREN UND ANORDNUNG ZUR PROTECTION-UMSCHALTUNG UND ZUR ÜBERWACHUNG IN EINEM DATENÜBERTRAGUNGSSYTEM**
PROTECTION SWITCHING AND MONITORING METHOD AND ARRANGEMENT IN A DATA TRANSMISSION SYSTEM
PROCEDE ET DISPOSITIF DE COMMUTATION DE PROTECTION ET DE CONTROLE DANS UN SYSTEME DE TRANSMISSION DE DONNEES

(30) Priorität: 23.04.2003 DE 10318426
(43) Veröffentlichungstag der Anmeldung: 18.01.2006
(73) Patentinhaber: SIEMENS AKTIENGESELLSCHAFT, 80333 München (DE)
(72) Erfinder: KALMAR, Andras, A-2324 Rannersdorf (AT); PLOTZ, Wilhelm-Martin, A-1020 Wien (AT)
(86) Internationale Anmeldenummer: PCT/EP2004/050431
(87) Internationale Veröffentlichungsnummer: WO 2004/095746

(56) Entgegenhaltungen:
- US-A1- 2002 024 699
- US-B1- 6 359 857
- US-B1- 6 430 201

## Beschreibung

Die Erfindung betrifft ein Verfahren zur Protection-Umschaltung und Überwachung in einem Datenübertragungssystems nach Patentanspruch 1 und eine hierzu geeignete Anordnungen nach Patentanspruch 7.

Bei Datenübertragungssystemen sind zur Erhöhung der Übertragungssicherheit Protection-Schaltungen vorgesehen. Bei einer 1+1-Protection wird ein Datensignal über eine Working-Verbindung und ein zweites Mal über eine Protection-Verbindung zu einem empfangenden Netzelement übertragen. Bei einer Unterbrechung der Working-Verbindung wird empfangsseitig auf das über die Protection-Verbindung übertragene Protection-Signal umgeschaltet.

Bei synchronen Datenübertragungssystemen werden häufig Multiplexsignale mit sehr hohe Datenraten übertragen. So wird bei einem hier beispielhaft beschriebenen System der "Synchronen Digitalhierarchie" SDH in der Regel ein Multiplexsignal übertragen, dass mindestens ein als Virtuellen Container bezeichnetes Datensignal, bei höheren Datenraten jedoch mehrere Virtuelle Container, enthält. Jeder dieser VC-4 Container kann wiederum mehrere Virtuelle Container kleinerer Granularität (geringerer Datenrate) beinhaltet. Die Virtuellen Container können außerdem noch über weitere Signalwege übertragen werden, wodurch die Zuverlässigkeit des Übertragungsnetzes weiter erhöht wird. Eine Protection-Umschaltung kann zwischen den kompletten Multiplexsignalen, dem Working- und dem Protection-Multiplexsignal, erfolgen. Bei einer "Path-Protection" wird zwischen "Working-Path-Signalen" und "Protection-Path-Signalen" umgeschaltet. Unter "Path-Signal" wird hier ein als Virtueller Container bezeichnes Datensignal verstanden, das als Teil des Multi plexsignals von einem Teilnehmer zu einem anderen Teilnehmer übertragen wird.

Die Performance der Verbindung wird sowohl auf der Multiplexsignal- als auch auf der Path-Ebene ständig überprüft. Für diese Verbindungen werden auch Alarmmeldungen generiert. Entsprechend sind getrennte kaskadierte Protection-Umschalteeinrichtungen auf Multiplexebene und auf Path-Ebene vorgesehen.

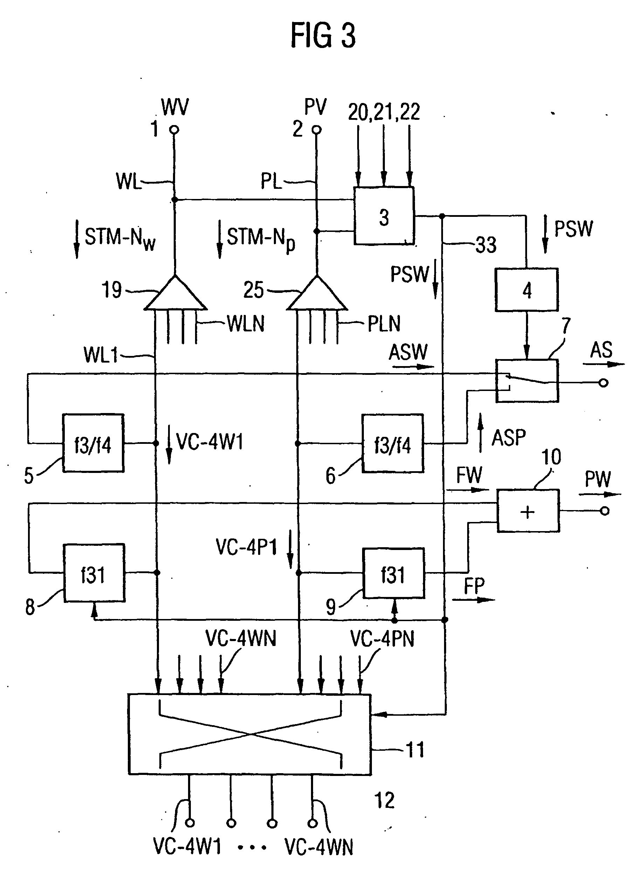

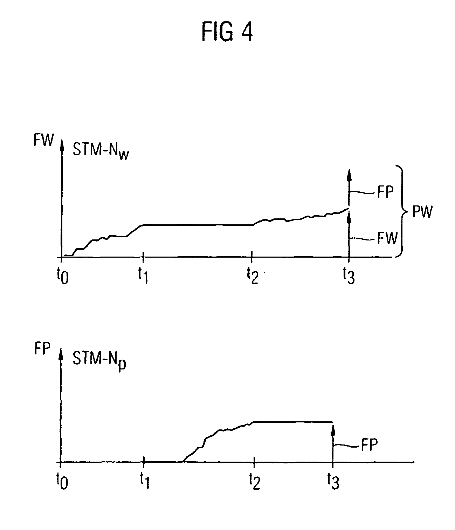

Das US-Patent 6,430,201 zeigt in Figur 3 eine Sendeanordnung, die in Spalte 5, Zeilen 43-64 beschrieben ist. Durch einen Multiplexer 38 werden die jeweils aktiven Signale ausgewählt. Die Empfangsseite ist in Figur 4 dargestellt. Das Problem einer Realisierung von Multipexssignal-Protection und Path-Protection wird hier nicht angesprochen. Das US-Patent 6,359,857 offenbart ein Verfahren zur Protection-Umschaltung und Alarm - Überwachung in einem Netzwerk.

Aufgabe der Erfindung ist es, ein vorteilhaftes Verfahren zur Protection-Umschaltung und zur Überwachung anzugeben. Außerdem ist eine hierzu geeignete Anordnung anzugeben.

Die Aufgabe wird entsprechend einem in unabhängigen Ansprüchen 1 und 5 angegebenen Verfahren für zwei Überwachungsverfahren gelöst. Geeignete Anordnungen zu deren Realisierung sind in den Ansprüchen 7 und 8 angegeben.

Vorteilhafte Weiterbildungen der Erfindung sind in den abhängigen Ansprüchen beschrieben.

Der besondere Vorteil der Erfindung liegt in der Realisierung der Protection-Umschaltefunktionen auf der Multiplexsignal- und der Path-Ebene mit nur einer einzigen Umschalteinrichtung.

Bei der Erfindung wird jedem Working-Path-Signal und jedem Protection-Path-Signal eine Überwachungseinrichtung zugeordnet. Die ermittelten Überwachungswerte können mit niedrigen Datenraten übertragen werden.

Die jetzt vor der Umschalteinrichtung liegenden Performance- und Alarm-Überwachungen werden so ausgebildet, dass sie funktionsmäßig im wesentlichen mit denen bei herkömmlicher Systemen nach den Umschalteinrichtungen angeordneten Überwachungseinrichtungen übereinstimmen.

Ein Ausführungsbeispiel der Erfindung wird anhand von Figuren näher erläutert.

Es zeigen
Figur 1 ein Ringnetz,
Figur 2 ein Prinzipschaltbild mit einer herkömmlichen Protection-Umschaltung,
Figur 3 ein Prinzipschaltbild der erfindungsgemäßen Protection-Umschalteinrichtung,
Figur 4 ein Zeitdiagramm zur Performance-Überwachung,
Figur 5 ein erweitertes ein Prinzipschaltbild der erfindungsgemäßen Protection-Umschalteinrichtung,
Figur 6 ein Ablaufdiagramm zur Alarm-Überwachung.

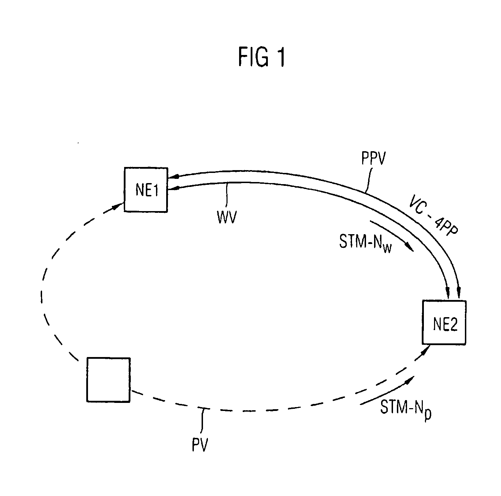

**Figur 1** zeigt ein Ringnetz mit verschiedenen Netzelementen NE1 bis NE3. Die Netzelemente NE1 und NE2 sind über eine (bidirektionale) durchgezeichnete Working-Verbindung WV und eine gestrichelt gezeichnete Protection-Vecbindung PV miteinander verbunden. Ein Multiplexsignal STM-N wird sowohl über die Working- als auch die Protection-Verbindung vom Netzelement NE1 zum Netzelement NE2 übertragen. Die Gegenrichtung braucht hier nicht betrachtet werden. Das über die Working-Verbindung WV gesendete Working-Multiplexsignal ist mit STM-N_{w} bezeichnet und das über die Protection-Verbindung PV gesendete Protection-Multiplexsignal mit STM-Nₚ. Es können auch noch weitere Protection-Verbindungen PPV vorhanden sein.

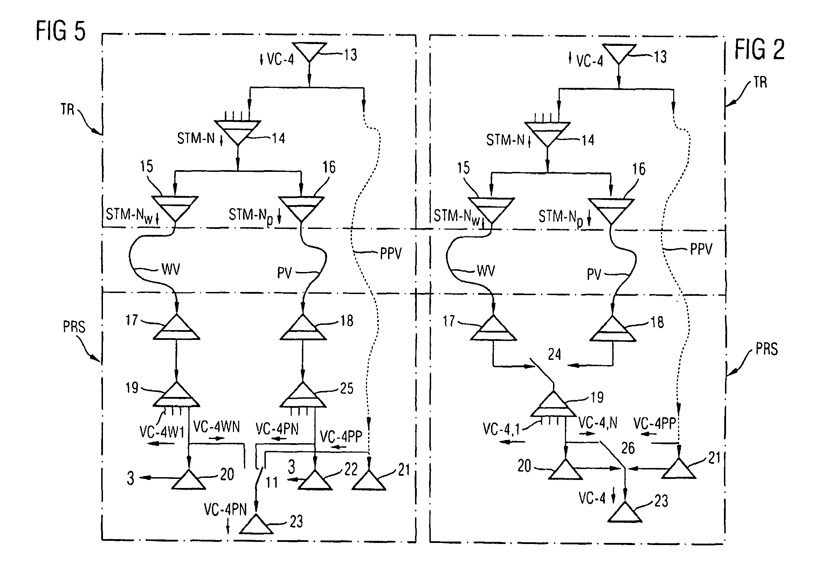

Zunächst soll die Funktion der bekannten Protection-Umschalteinrichtung und der zugehörigen Performance-Überwachung für ein SDH-System anhand eines in Figur 2 dargestellten Prinzipschaltbildes erläutert werden. Dies zeigt die Verbindung zwischen einer Sendeeinrichtung TR des Netzelements NE1 über die Working-Verbindung WV und die Protection-Verbindung PV mit einer empfangsseitigen Protection-Umschalteinrichtung PRS im Empfangsteils des Netzelements NE2.

Eine Datenquelle 13, hier eine VC-4-Quelle, liefert ein "VC-4-Pathsignal", das zusammen mit weiteren VC-4-Pathsignalen zu einem Multiplexsignal STM-N (Transportmodul) zusammengefasst und von einer STM-N-Quelle 14 abgegeben wird. Dieses Multiplexsignal wird bei 1+1-Protection sowohl als Working-Multiplexsignal STM-N_{W} über eine STM-Working-Quelle 15 und eine Working-Verbindung WV als auch als Protection-Multiplexsignal STM-N_{P} über eine STM-Protection-Quellc 16 und eine Protection-Verbindung PV zum Empfangsteil übertragen. Hier wird das Morking-Multiplexsignal STM-N_{W} (auch ein STM-1-Signal) in einer working-Terminierungseinrichtung 17 und das Protection-Multiplexsignal STM-N_{P} in einer Protection-Terminierungseinrichtung 18 überprüft. Vom Ergebnis der Überprüfung abhängig, wird der Multiplexsignal-Umschalter 24, gesteuert, die das bessere (oder allein vorhandene) Multiplexsignal STM-N_{W} oder STM-N_{P} durchschaltet. Fällt das Working-Multiplexsignal STM-N_{W} aus, so wird auf das komplette Protection-Multiplexsignal STM-N_{P} umgeschaltet.

In **Figur 2** wird von einem STM-4-Signal ausgegangen. Dieses wird durch Demultiplexen in einer Demultiplexeinrichtung 19 (vereinfacht dargestellt) in vier Path-Signale, die als VC-4-Signale oder VC-4-Container VC-4,1 - VC4,N (N = 4) bezeichnet werden (handelt es sich bei den übertragenen Multiplexsignalen um beispielsweise ein STM-16-Signal, so beinhaltet jedes Multiplexsignal 16 VC-4-Container). Die Path-Signale werden einer Path-Umschalteinrichtung 26, von der nur repräsentativ nur ein Umschalter dargestellt ist, zugeführt und in VC-4-Überwachungseinrichtungen 20 (von denen ebenfalls nur eine dargestellt ist) überwacht.

Die gezeigte Anordnung ist auch für mehr als ein Protection-Signal erweiterbar. Über eine Path-Protection-Verbindung PPV können weitere VC-4-Signale VC-4PP empfangen werden. Die Qualität dieser Virtuellen Container VC-4PP wird in einer weiteren VC-4-Überwachungseinrichtung 21 überprüft. Eine in dieser Figur nicht dargestellte Steuerung wertet die VC-4-Überwachungsergebnisse der VC-4-Überwachungseinrichtungen 20 und 21 aus und steuert einen Path-Umschalter 26. Das ausgewählte VC-4-Path-Signal wird an einer VC-4-Terminierungseinrichtung 23 terminiert, d.h. vom Overhead befreit und durch eine Performance-Überwachungseinrichtung überwacht. Wahlweise kann eine Multiplexsignal-Protection, Path-Protection oder eine Mischform hiervon verwendet werden.

Bei dieser bekannten Anordnung, erfolgte also die Protection-Umschaltung in der Multiplex-Ebene in einer ersten Umschalteinrichtung 24 und in der Path-Ebene in einer zweiten Umschalteineinrichtung 26. Eine Performance-Überwachung oder Alarm-Überwachung auf Path-Ebene erfolgte erst nach der Auswahl des besseren Path-Signals in den Path-Überwachungseinrichtungen 23.

Eine Performance-Überwachung dient dazu, den Zustand einer Path-Verbindung ständig zu überprüfen und in bestimmten Abständen die Performance-Resultate zu erstellen. Insbesondere soll eine Qualitätsaussage für das ausgewählte und dem Teilnehmer (Kunden) zugeführte Signal (beispielsweise VC-4) getroffen werden, wobei gleichgültig ist, ob dieses über die Working- oder die Protection-Verbindung übertragen wird. Geeignete Messwerte können beispielsweise Paritätsfehler oder Zeiten schlechter Empfangsqualität sein. Bei einem SDH-System ist die Performance-Überwachung als f31-Funktion bekannt.

Eine Alarm-Überwachung (Fault Management) dient zur Ermittlung von Fehlerursachen des SDH-Systems und beinhaltet insbesondere f3, f4-Funktionen.

**Figur 3** zeigt in prinzipieller und stark vereinfachter Darstellung eine erfindungsgemäße Anordnung zur Protection-Umschaltung und zur Überwachung im Empfangsteil des Netzelementes NE2. Es sind nur die wichtigsten Funktionseinheiten dargestellt. Das vom Netzelement NE1 ausgesendete Working-Multiplexsignal STM-N_{W} wird über die Working-Verbindung WV dem Working-Terminal 1. einer Working-Leitung WL und das Protection-Multiplexsignal STM-N_{P} wird über die Protection-Verbindung PV dem Protection-Terminal 2 einer Protection-Leitung PL zugeführt. In einer Working-Demultiplexeinrichtung 19 und einer Protection-Demultiplexeinrichtung 25 erfolgt zu nächst die Aufteilung des Working-Multiplexsignals STM-N_{W} und das Protection-Multiplexsignal STM-N_{P} in mehrere working-Path-Signale VC-4W1 - VC-4WN und mehrere Protection-Path-Signale VC-4P1 - VC-4PN, die über separate Working-Path-Leitungen WL1 - WLN und Protection-Path-Leitungen PL1 - PLN einer Umschalteinrichtung 11 zugeführt werden (ebenso ist eine Aufteilung in Signale kleinerer Granularitäten, d. h. in Signale noch geringerer Datenrate, und deren Überwachung möglich). An den Signalausgängen 12 werden in der Darstellung sämtliche N im ausgewählten Multiplexsignal STM-N_{W} oder STM-N_{P} enthaltenen VC-4-Container ausgegeben.

Sowohl an der Working-Leitung WL als auch an der Protection-Leitung PL sind die Eingänge einer Protection-Überwachungseinrichtung 3 auf Multiplexsignal-Ebene angeschaltet. Deren Funktion soll nun näher erläutert werden. Eine Umschaltung von der Working-Verbindung WV auf die Protection-Verbindung PV findet, wie bereits beschrieben, dann statt, wenn die über die Working-Verbindung empfangen Signale STM-N_{W} schlechtere Qualität aufweisen als die über die Protection-Verbindung PV empfangenen Signale oder gar die Working-Verbindung unterbrochen ist. Die Umschaltung vom Working-Signal STM-N_{W} auf das Protection-Signal STH-N_{P} erfolgt über die Umschalteinrichtung 11, die in diesem Fall alle virtuellen VC-4-Signale des ausgewählten Multiplexsignals auf Path-Ebene durchschaltet und hierdurch eine Protection-Umschaltung auf Multiplexsignalebene bewirkt.

Die Umschalteinrichtung 11 wird von der Protection-Überwachungseinrichtung 3 über eine Steuerleitung 33 betätigt.

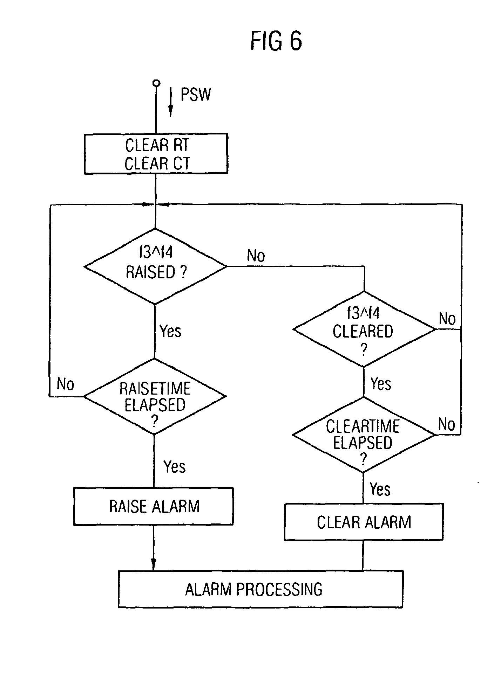

Neben dem kompletten Umschalten zwischen Multiplexsignalen kann auch eine Umschaltung auf Path-Ebene, d. h. hier einzelner VC-4-Path-Signale oder Gruppen von VC-4-Signalen durchgeführt werden, die von den VC-4-Überwachungseinrichtungen 20, 21, 22 (Figur 5) ausgelöst wird. Die entsprechende Steuerung der einzigen Umschalteinrichtung 11 erfolgt über die Protection-Überwachungseinrichtung 3 oder eine weitere Steuerung. In Figur 3 wurden alle Working-Path-Signale ausgewählt.

An jede der Path-Leitungen WL1 - WLN und PL1 - PLN sind jeweils eine Working-Performance-ÜberwaChungseinrichtung 8 und eine Working-Alarm-Überwachungseinrichtung 5 bzw. eine Protection-Performance-Überwachungseinrichtung 9 und eine Protection-Alarm-Überwachungseinrichtung 6 zur Überwachung jeweils eines VC-4-Path-Signals angeschaltet. Von den Überwachungseinrichtungen sind jeweils nur eine Performance-Überwachungseinrichtung und eine Alarm-Überwachungseinrichtung für die Path-Leitungen WL1 und PL1 dargestellt. Die Performance-Überwachungseinrichtungen 8 und 9 werden von der Protection-Überwachungseinrichtung 3 gesteuert. Die Ausgänge der Performance-Überwachungseinrichtungen 8 und 9 sind einer Akkumulationseinrichtung 10 zugeführt, die resultierende Performance-Werte PW abgibt.

Die Ausgänge der Alarm-Überwachungseinrichtungen 5 und 6 für die Path-Ebene sind einer Alarm-Umschalteinrichtung 7 zugeführt, die ein Alarmsignal AS abgibt. Das Alarmsignal und das Performance-Signal beinhalten in der Regel mehrere Einzelinformationen.

Die Alarm-Überwachungseinrichtungen 5, 6 und die Alarm-Umschalteinrichtung 7 werden von einer Alarm-Auswahlschaltung 4 gesteuert, der wiederum von der Protection-Übecwachungseinrichtung 3 das Umschaltkriterium zugeführt wird.

Erfindungsgemäß wird nicht mehr die Performance-Überwachung des ausgewählten Path-Signal durchgeführt, sondern es wird von der Working-Performance-Überwachungseinrichtung 8 die Überwachung für die Working-Container VC-4W1 und von der Protection-Performance-Überwachungseinrichtung 9 die Überwachung für die Protection-Container VC-4P1 separat durchgeführt. Ist das Working-Signal STM-N_{W} durchgeschaltet, so arbeitet nur die zugehörige Working-Performance-Überwachungseinrichtung 8, die beispielsweise Fehler oder Zeiten schlechten Empfangs addiert, und die zugehörige Protection-Performance-Überwachungseinrichtung 9 ruht.

Anhand von **Figur 4** wird die Wirkungsweise der Performance-Überwachung bei einer Fehlermessungen genauer erläutert. Zunächst ist bei Beginn einer Messperiode L₀ das Working-Signal durchgeschaltet und die von der Working-Performance-Überwachungseinrichtung 8 gemessenen Fehlerwerte, die Performance-Werte FW, werden summiert.

Wird nun zum Zeitpunkt t₁ auf das Protection-Signal STM-Nₚ umgeschaltet, dann bleibt das Messergebnis der working-Performance-Überwachungseinrichtung 8 gespeichert, die Protection-Performance-Überwachungseinrichtung 9 wird aktiviert und akkumuliert als zweites Performance-Signal FP die Fehler des Protection-Signals STM-N_{P}, d. h. nur das jeweils durchgeschaltete Signal wird vor der Durchschaltung überwacht.

Zum Zeitpunkt t2 wird auf das Working-Signal zurückgeschaltet; jetzt ruht wieder die Protection-Performance-Überwachung 9 und die Fehler des Working-Signals werden weiter akkumuliert. Am Ende einer Überwachungsperiode t₃ werden die akkumulierten Performance-Werte FW und FP in der Akkumulationseinrichtung 10 zu einem resultierenden Performance-Wert PW addiert, der dem des ausgewählten Path-Signals entspricht. Das resultierende Performance-Signal PW wird dem Teilnehmer oder einem Managementsystem zur Verfügung gestellt. Bei entsprechender Ausführung der Performance-Überwachungen 8, 9 o der der Akkumulationseinrichtung 10 ist es auch möglich, sowohl die Working- und als auch die Protection-Verbindung dauerhaft zu überwachen und ein resultierendes Performancesignal zu ermitteln.

**Figur 5** zeigt die erfindungsgemäße Anordnung nochmals in detaillierterer Darstellung, die sich sendeseitig nicht von der

in **Figur 2** dargestellten bekannten Anordnung unterscheidet. Empfangsseitig sind zusätzlich zu der in Figur 3 dargestellten Anordnung entsprechen Figur 2 jedoch jeweils eine Terminierungseinrichtung 17 für das Working-Signal STM-M_{W} und eine weitere Terminierungseinrichtung 18 für das Protection-Signal STM-N_{P} vorhanden. Die Überwachung der Multiplexsignale wird von diesen Terminierungseinrichtungen 17 und 18 vorgenommen. Die Aufteilung in Working-Path-Signale VC-4W1 - VC-4WN erfolgt in einer Working-Demultiplexeinrichtung 19, die Aufteilung in Protection-Path-Signale VC-4P1 - VC-4PN in einer Protection-Demultiplexeinrichtung 25.

Es ist nur die eine Umschalteinrichtung 11 vorhanden, die nur Path-Umschalter enthält. Einer dieser Umschalter ist dargestellt.

Bei einer Umschaltung zwischen dem kompletten Working-Signal STM-N_{W} und dem kompletten Protection-Multiplexsignal STM-N_{P} wird die Schaltfunktion des Multiplexsignal-Umschalters 24 (**Figur 2**) jetzt durch die Schalter der Umschalteinrichtung 11 realisiert, indem von allen VC-4-Containern des Working-Multiplexsignals auf die VC-4-Containern des Protection-Multiplexsignals umgeschaltet wird. Diese komplette Umschaltung wird im allgemeinen von den Terminierungseinrichtungen 17 und 18 und die Protection-Überwachungseinrichtung 3 veranlasst.

In diesem Fall kann auch eine weitere nicht dargestellte Umschaltunqsmöglichkeit im Bereich der Terminierungseinrichtungen 17 und 18 zur Auswahl des jeweiligen ausgewählten Overheads der Signale STM-N_{W} oder STM-N_{P} vorgesehen sein.

Durch die Umschalteinrichtung 11 ist es auch möglich, jeweils zwischen einzelnen über die Working-Verbindung WV und über die Protection-Verbindung PV oder über die zusätzliche Protection-Verbindung PPV übertragenen Path-Signalen VC-4PP zu wählen. So können jeweils die Path-Signale besserer Qualität auf VC-4-Ebene selektiert werden. Die Umschaltung einzelner VC-4-Subsignale wird über die VC-4-Überwachungseinrichtungen 20, 21, 22, ... veranlasst. In dieser Figur wurde nur die Auswahl eines Protection-Path-Signals VC-4P,N dargestellt.

Die Überwachung jeweils beider einander entsprechenden VC-4 Signale erfolgt durch die VC-4-Übecwachungseinrichtungen 20 und 22, die vor der Umschalteinrichtung liegen. Beim Stand der Technik (Figur 2)ist nur eine Überwachungsvorrichtung 20 vorgesehen, die nach dem Multiplexschalter 24 angeordnet ist.

Außer der Performance-Überwachung ist eine Alarm-Überwachung vorgesehen, die bei SDH-System als Fault-Management bezeichnet und mittels Funktionen f1 - f8 beschrieben wird. Die wesentliche Funktionen f3 und f4 sind in Figur 3 eingetragen. Wie bei der Performance-Überwachung sind eine Working-Alarm-Überwachungseinrichtung 5 und eine Protection-Alarm-Überwachungseinrichtung 6 auf Path-Ebene vorgesehen. Würde nur eine Alarm-Überwachungseinrichtung verwendet werden, müssten dieser jeweils (analog zu einer bisher üblichen Performance-Überwachung) das ausgewählte Multiplexsignal zugeführt werden. Durch das f3-Filter werden jeweils die auftretenden Fehler überwacht und korreliert sowie deren Ursache ermittelt, während das f4-Filter eine zeitliche Integration vornimmt und nur dauerhaft anliegende Fehler weitergibt. Entsprechend dem ausgewählten Signal STM-N_{W} oder STM-N_{P} bzw. dem ausgewählten Path-Signal wird die Alarmmeldung ASW oder ASP der zugehörigen Alarm-Überwachung 5 oder 6 ausgewählt, und damit ein in der Regel aus unterschiedlichen Einzelmeldungen bestehendes Alarmsignal AS ausgegeben. Um Irritationen durch schnell aufeinanderfolgende Änderungen des Alarmsignals zu vermeiden, werden allerdings nicht sofort nach einer Umschaltung zwischen Working- und Protection-Signal die Alarmsignale des neu ausgewählten Signals weitergegeben. Es soll vielmehr ein Alarmsignal entsprechend den Zeitbedingungen weitergegeben werden, die weitestgehend denen bei der Alarmüberwachung eines ausgewählten Path-Signals entsprechen.

**Figur 6** zeigt ein Ablaufdiagramm zur Verdeutlichung der Alarmierungsprozesse, die in den Alarm-Übcrwachungseinrichtungen 5 und 6 (Figur 2) parallel ablaufen. Bei jeder Protection-Umschaltung - ausgelöst vom Protection-Umschaltungsignal PSW - werden zwei in der f4-Funktion der wirksamen Alarm-Überwachungseinrichtung realisierte Timer, ein sogenannter RAISE-Timer RT und ein CLEAR-Timer CT zurückgesetzt. Nur wenn die Ausgangssignale der f3- und f4-Funktion übereinstimmen, wird die bestehende Alarmmeldung geändert. Voraussetzung für eine Änderung der Alarmmeldung ist außerdem, dass die Überwachungszeiten, als RAISE-Time und CLEAR-Time bezeichnet, abgelaufen (elapsed) sind (zumindest wenn die Alarmsignale des Working-Path-Signals und des zugehörigen Protection-Path-Signals unterschiedlich sind).

Zunächst wird beispielsweise abgefragt, ob die f3- und f4-Fehlermeldung vorhanden sind: "f3 A f4 RAISED?". Trifft dies zu, wird überprüft, ob die RAISE-TIME abgelaufen ist. Ist auch diese Bedingung erfüllt, wird eine Alarmmeldung "RAISE ALARM" ausgegeben. Wenn keine f3- und f4-Fehlermeldung vorliegt, wird abgefragt, ob f3 und f4 beide keine Fehlermeldung abgeben: "f3 A f4 CLEARED?". Ist diese Bedingung erfüllt, wird der Zustand des CLEAR-Timers CT überprüft. Ist die "CLEAR-TIME" abgelaufen, wird der Alarm "CLEAR-Alarm" gelöscht. Beide Fehlermeldungen "RAISE ALARM" und "CLEAR ALARM" werden für eine übliche Alarmverarbeitung "ALARM PROZESSING" genutzt. Sind die Zeitbedingungen nicht erfüllt, erfolgt wiederum eine f3Af4 - Abfrage.

Auch wenn statt einer 1+1-Protection eine 1:1 -oder 1:N - Protection vorgesehen ist, bei der nur im Störungsfall ein Protection-Signal ausgesendet wird, kann die selbe Schaltungsanordnung verwendet werden.

## Patentansprüche

1. Verfahren zur Protection-Umschaltung und Überwachung in einem Datenübertragungssystem, bei dem ein Working-Multiplexsignal (STM-N_{W}) über eine Working-Verbindung (WV) und ein Protection-Multiplexsignal (STM-Np) über eine Protection-Verbindung (PV) zwischen Netzelementen (NE1, NE2) übertragen werden und empfangsseitig eine Multiplexsignal-Protection-Umschaltung zwischen diesen Multiplexsignalen (STM-N_{W}, STM-N_{P}) und/oder eine Path-Protection-Umschaltung zwischen darin enthaltenen Path-Signalen (VC-4W1 - VC-4WN; VC-4P1 - VC-4PN) sowie eine Performance-Überwachung der ausgewählten Path-Signale erfolgt,
**dadurch gekennzeichnet,**
**dass** das Working-Multiplexsignal (STM-N_{W}) in Working-Path-Signale (VC-4W1 - VC-4WN) und das Protection-Multiplexsignal (STM-N_{P}) in Protection-Path-Signale (VC-4P1 - VC-4PN) aufgeteilt wird,
**dass** die Working-Path-Signale (VC-4W1 - VC-4WN) und die Protection-Path-Signale (VC-4P1 - VC-4PN) nur einer Umschalteinrichtung (11) sowohl zur Multiplexsignal-Protection-Umschaltung als auch zur Path-Protection-Umschaltung zugeführt werden,
**dass** die Multiplexsignal-Protection-Umschaltung durch Umschaltung aller Path-Signale (VC-4W1 - VC-4WN; VC-4P1 - VC-4PN) durchgeführt wird,
**dass** die Performance-Überwachung der Working-Path-Signale (VC-4W1) und der Protection-Path-Signals (VC-4P1) vor der Schalteinrichtung (11) erfolgt und
**dass** Performance-Werte (FW, FP) des jeweils ausgewählten Working-Path-Signals (VC-4W1) oder des zugehörigen Protection-Path-Signals (VC-4P1) akkumuliert werden und am Ende (t₃) einer Überwachungsperiode ein resultierender Performance-Wert (PW) ermittelt wird.

2. Verfahren nach Anspruch 1,
**dadurch gekennzeichnet,**
**dass** die Performance-Überwachung jeweils für ein Working-Path-Signal (VC-4W1) in einer Working-Performance-Überwachungseinrichtung (8) und für das entsprechende Protection-Path-Signal (VC-4P1) in einer separaten Protection-Performance-Überwachungseinrichtung (9) erfolgt.

3. Verfahren nach Anspruch 1 oder 2,
**dadurch gekennzeichnet,**
**dass** mehrere Protection-Verbindungen (PV, PPV) überprüft werden.

4. Verfahren nach Anspruch 1 oder 2,
**dadurch gekennzeichnet,**
**dass** nur bestimmte Teile der Multiplexsignale (STM-N_{W}, STM-N_{P}) oder der Path-Signale (VC-4W, VC-4P) kleinerer Granularität überprüft werden.

5. Verfahren nach Anspruch 1,
**dadurch gekennzeichnet,**
**dass** jeweils Alarmüberwachungen (f3, f4) der Working-Path-Signale ((VC-4W1) und der zugehörigen Protection-Path-Signale (VC-4P1) vor der Umschalteinrichtung (11) durchgeführt werden und
**dass** das Alarm-Kriterium (ASW, ASP) des jeweils ausgewählten Signals (VC-4W1 oder VC-4P1) weitergemeldet wird.

6. Verfahren nach Anspruch 5,
**dadurch gekennzeichnet,**
**dass** nach einer Protection-Umschaltung das Alarm-Kriterium (ASW, ASP) des neu ausgewählten Working-Path-Signals (VC-4W1) oder Protection-Path-Signals (VC-4P1) erst nach Ablauf einer Prüfzeit geändert wird.

7. Anordnung zur Protection-Umschaltung und Überwachung in einem Datenübertragungssystem, bei dem ein Working-Multiplexsignal (STM-N_{W}) über eine Working-Verbindung (WV) und/oder ein Protection-Multiplexsignal (STM-N_{P}) über eine Protection-Verbindung (PV) zwischen Netzelementen (NE1, NE2) übertragen werden und empfangsseitig eine Protection-Umschaltung zwischen diesen Multiplexsignalen oder darin enthaltenen Path-Signalen (VC-4W1 - VC-4WN; VC-4P1 - VC-4PN) sowie eine Performance-Überwachung der ausgewählten Path-Signale erfolgt,
**dadurch gekennzeichnet,**
**dass** nur eine Schalteinrichtung (11) vorgesehen ist, der über Working-Path-Leitungen (WL1 - WL4) die Working-Path-Signale (VC-4W1 - VC-4WN) und über Protection-Path-Leitungen (PL1 - PL4) die Protection-Path-Signale (VC-4P1 - VC-4PN) zugeführt werden, wobei die Multiplexsignal-Protection-Umschaltung durch Umschaltung aller Path-Signale (VC-4W1 - VC-4WN; VC-4P1 - VC-4PN) durchgeführt wird,
**dass** an jede der Working-Path-Leitungen (WL1) eine Working-Performance-Überwachungseinrichtung (8) und jede der Protection-Path-Leitungen (PL1) eine Protection-Performance-Überwachungseinrichtung (9) angeschaltet ist und
**dass** eine Akkumulationseinrichtung (10) an die Überwachungseinrichtungen (8, 9) angeschaltet ist, die die resultierende Performance-Werte (PW) ermittelt.

8. Anordnung nach Anspruch 7,
**dadurch gekennzeichnet,**
**dass** an jede der Working-Path-Leitungen (WL1) eine Working-Alarm-Überwachungseinrichtung (5) und an jede der Protection-Path-Leitungen (PL1) eine Protection-Alarm-Überwachungseinrichtung (6) angeschaltet ist, dass jeweils das Working-Alarmsignal (ASW) von einer Working-Alarm-Überwachungseinrichtung (5) und das Protection-Alarmsignal (ASP) von einer zugehörigen Protection-Alarm-Überwachungseinrichtung (6) einer Alarm-Umschalteinrichtung (7) zugeführt werden,
**dass** die Alarm-Umschalteinrichtung (7) von einer Alarmsteuerung (4) betätigt wird, der ein Protection-Umschaltsignal (PSW) zugeführt wird, das Alarmsignal (ASW, ASP) des neu ausgewählten Path-Signals (VC-4W1 oder VC-4P1) erst nach Ablauf einer Prüfzeit über die Alarm-Umschalteinrichtung (7) durchschaltet.

## Claims

1. Method for protection switching and monitoring in a data transmission system, in which a working multiplex signal (STM-N_{W}) is transmitted over a working connection (WV) and a protection multiplex signal (STM-N_{P}) over a protection connection (PV) between network elements (NE1, NE2) and on the receive side multiplex signal protection switching between these multiplex signals (STM-N_{W}, STM-N_{P}) and/or a path protection switching between path signals (VC-4W1 - VC-4WN; VC-4P1 - VC-4PN) is undertaken as well as performance monitoring of the selected path signals,
**characterized in that**,
the working multiplex signal (STM-N_{W}) is divided into working path signals (VC-4W1 - VC-4WN) and the protection multiplex signal (STM-N_{P}) into protection path signals (VC-4P1 - VC-4PN),
the working path signals (VC-4W1 - VC-4WN) and the protection path signals (VC-4P1 - VC-4PN) are routed to only one switching device (11) both for multiplex signal protection switching as also for path protection switching,
the multiplex signal protection switching is undertaken by switching all path signals (VC-4W1 - VC-4WN; VC-4P1. - VC-4PN),
the performance monitoring of the working path signals (VC-4W1) and of the protection path signals (VC-4P1) is undertaken before the switching device (11) and
performance values (FW, FP) of the working path signals (VC-4W1) or of the associated protection path signals (VC-4P1) in each case are accumulated and at the end (t₃) of a monitoring period a resulting performance value (PW) is determined.

2. Method in accordance with claim 1,
**characterized in that**
performance monitoring is undertaken for a working path signal (VC-4W1) in a working performance monitoring device (8) and for the corresponding protection path signal (VC-4P1) in a separate protection performance monitoring device (9).

3. Method in accordance with claim 1 or 2,
**characterized in that**
a number of protection connections (PV, PPV) are checked.

4. Method in accordance with claim 1 or 2,
**characterized in that**
only specific parts of the multiplex signals (STM-N_{W}, STM-N_{P}) or of the path signals (VC-4W, VC-4P) of lower granularity are checked.

5. Method in accordance with claim 1,
**characterized in that**
the alarm monitoring (f3, f4) of the working path signals ((VC-4W1) and the associated protection path signals (VC-4P1) is undertaken before the switching device (11) and
the alarm criterion (ASW, ASP) of the signal selected in each case (VC-4W1 or VC-4P1) is passed on.

6. Method in accordance with claim 5,
**characterized in that**
after protection switching the alarm-criterion (ASW, ASP) of the newly selected working-path signal (VC-4W1) or protection path signal (VC-4P1) is only changed after a checking time has elapsed.

7. Arrangement for protection switching and monitoring in,a data transmission system, in which a working multiplex signal (STM-N_{W}) is transmitted over a working-connection (WV) and/or a protection multiplex signal (STM-N_{P}) over a protection connection (PV) between network elements (NE1, NE2) and on the receive side a protection circuit between these multiplex signals or path signals (VC-4W1 - VC-4WN; VC-4P1 - VC-4PN) contained within them as well as performance monitoring of the selected path signals is undertaken.
**characterized in that**
only one switching device (11) is provided to which the working path signals (VC-4W1 - VC-4WN) are routed over working path lines (WL1 - WL4) and the protection path signals (VC-4P1 - VC-4PN) over protection path lines (PL1 - PL4), with the multiplex signal protection switching being undertaken by switching all path signals (VC-4W1 - VC-4WN; VC-4P1 - VC-4PN), a working performance monitoring device (8) is connected to each of the working path lines (WL1) and a protection performance monitoring device (9) is connected to each of the protection path lines (PL1) and
an accumulation device (10) is connected to the alarm monitoring devices (8, 9) which determines the resulting performance values (PW).

8. Arrangement in accordance with claim 7,
**characterized in that**
a working alarm monitoring device (5) is connected to each of the working path lines (WL1) and a protection alarm monitoring device (6) is connected to each of the protection path lines (PL1),
the working alarm signal (ASW) is routed from a working alarm monitoring device (5) and the protection alarm signal (ASP) from an associated protection alarm-monitoring device (6) to an alarm switching device (7) in each case.
the alarm switching device (7) is activated by an alarm control (4) to which a protection switching signal (PSW) is routed, through connects the alarm signal (ASW, ASP) of the newly selected path signal (VC-4W1 or VC-4P1) via the alarm switching device (7) only after a checking time has elapsed.

## Revendications

1. Procédé de commutation de protection et de contrôle dans un système de transmission de données, dans lequel' sont transmis, entre des éléments de réseau (NE1, NE2), un signal multiplex de travail (STM-N_{w}) par l'intermédiaire d'une liaison de travail (WV) et un signal multiplex de protection (STM-Nₚ) par l'intermédiaire d'une liaison de protection (PV) et dans lequel sont réalisés, côté réception, une commutation de protection du signal multiplex entre ces signaux multiplex (STM-N_{w}, STM-Nₚ) et/ou une commutation de protection de trajet entre des signaux de trajet (VC-4W1 - VC-4WN ; VC-4P1 - VC-4PN) qui y sont compris ainsi qu'un contrôle de performance des signaux de trajet,
**caractérisé en ce**
**que** le signal multiplex de travail (STM-N_{W}) est divisé en signaux de trajet de travail (VC-4W1 - VC-4WN) et en ce que le signal multiplex de protection (STM-N_{P}) est divisé en signaux de trajet de protection (VC-4P1 - VC-4PN),
en ce que les signaux de trajet de travail (VC-4W1 - VC-4WN) et les signaux de trajet de protection (VC-4P1 - VC-4PN) sont amenés à seulement un dispositif de commutation (11) aussi bien pour la commutation de protection du signal multiplex que pour la commutation de protection du trajet,
en ce que la commutation de protection du signal multiplex est réalisée par commutation de tous les signaux de trajet (VC-4W1 - VC-4WN ; VC-4P1 - VC-4PN),
en ce que le contrôle de performance des signaux du trajet de travail (VC-4W1) et des signaux du trajet de protection (VC-4P1) a lieu en amont du dispositif de commutation et
en ce que des valeurs de performance (FW, FP) du signal du trajet de travail (VC-4W1) respectivement sélectionné ou du signal du trajet de protection correspondant (VC-4P1) sont accumulées et en ce qu'une valeur de performance (PW) résultante est déterminée à la fin (t3) d'une période de contrôle.

2. Procédé selon la revendication 1,
**caractérisé en ce**
**que** le contrôle de performance est respectivement réalisé pour un signal du trajet de travail (VC-4W1) dans un dispositif de contrôle de performance de travail (8) et pour le signal du trajet de protection correspondant (VC-4P1) dans un dispositif de contrôle de performance de protection (9) à part.

3. Procédé selon la revendication 1 ou 2,
**caractérisé en ce**
**que** plusieurs liaisons de protection, (PV, PPV) sont contrôlées.

4. Procédé selon la revendication 1 ou 2,
**caractérisé en ce**
**que** seulement certaines parties des signaux multiplex (STM-N_{w}, STM-Nₚ) ou des signaux de trajet (VC-4W, VC-4P) de granularité plus petite sont contrôlées.

5. Procédé selon la revendication 1,
**caractérisé en ce**
**que** des contrôles d'alarme (f3, f4) des signaux du trajet de travail (VC-4W1) et des signaux de trajet de protection correspondants (VC-4P1) sont réalisés en amont du dispositif de commutation (11) et
en ce que le critère d'alarme (ASW, ASP) du signal respectivement sélectionné (VC-4W1 ou VC-4P1) continue d'être signalé.

6. Procédé selon la revendication 5,
**caractérisé en ce**
**qu'**après une commutation de protection, le critère d'alarme (ASW, ASP) du signal du trajet de travail (VC-4W1) nouvellement sélectionné ou du signal du trajet de protection (VC-4P1) est modifié seulement après expiration d'un temps de contrôle.

7. Dispositif de commutation de protection et de contrôle dans un système de transmission de données, dans lequel sont transmis, entre des éléments de réseau (NE1, NE2), un signal multiplex de travail (STM-N_{w}) par l'intermédiaire d'une liaison de travail (WV) et/ou un signal multiplex de protection (STM-Nₚ) par l'intermédiaire d'une liaison de protection (PV) et dans lequel sont réalisés, côté réception, une commutation de protection entre ces signaux multiplex ou des signaux de trajet qui y sont contenus (VC-4W1 - VC-4WN ; VC-4P1 - VC-4PN) ainsi qu'un contrôle de performance des signaux de trajet sélectionnés,
**caractérisé en ce**
**que** seulement un dispositif de commutation (11) est prévu, auquel sont amenés les signaux du trajet de travail (VC-4W1 - VC-4WN) par l'intermédiaire de lignes du trajet de travail (WL1 - WL4) et les signaux du trajet de protection (VC-4P1 - VC-4PN) par l'intermédiaire de lignes, du trajet de protection (PL1 - PL4), la commutation de protection du signal multiplex étant réalisée par commutation de tous les signaux du trajet (VC-4W1 - VC-4WN ; VC-4P1 -VC-4PN),
en ce que sur chacune des lignes (WL1) du trajet de travail est connecté un dispositif de contrôle de performance de travail (8) et que sur chacune des lignes (PL1) du trajet de protection est connecté un dispositif de contrôle de performance de protection (9) et
en ce qu'un dispositif d'accumulation (10) est connecté aux dispositifs de contrôle (8, 9), celui-ci déterminant les valeurs de performance résultant (PW).

8. Dispositif selon la revendication 7,
**caractérisé en ce**
**qu'**un dispositif de contrôle d'alarme de travail (5) est connecté sur chacune des lignes (WL1) du trajet de travail et en ce qu'un dispositif de contrôle d'alarme de protection (6) est connecté sur chacune des lignes (PL1) du trajet de protection,
en ce que le signal d'alarme de travail (ASW) est respectivement amené par un dispositif de contrôle d'alarme de travail (5) et en ce que le signal d'alarme de protection (ASP) est amené par un dispositif de contrôle d'alarme de protection (6) correspondant à un dispositif de commutation d'alarme,
en ce que le dispositif de commutation d'alarme (7) est actionné par une commande d'alarme (4) à laquelle un signal de commutation de protection (PSW) est amené, en ce que le signal d'alarme (ASW, ASP) du signal de trajet. (VC-4W1 ou VC-4P1) nouvellement sélectionné est connecté par l'intermédiaire du dispositif de commutation d'alarme (7) seulement après l'expiration d'un temps de contrôle.
